# EUROPÄISCHE PATENTANMELDUNG

(11) **EP 2 463 639 A2**
(43) Veröffentlichungstag der Anmeldung: **13.06.2012**
(21) Anmeldenummer: 11191667.2
(22) Anmeldetag: 02.12.2011
(51) Int. Cl.: G01N 9/26

(54) **Dichtewächter**

(30) Priorität: 10.12.2010 DE 102010062857; 20.12.2010 DE 102010055249
(71) Anmelder: Trafag AG, 8708 Männedorf (CH)
(72) Erfinder: Halbheer, Remo, 8340 Hinwil (CH)
(74) Vertreter: Flügel Preissner Kastel Schober

(57) **Zusammenfassung**

Die Erfindung betrifft einen Dichtewächter (9) zur Überwachung einer Gasdichte in einem Messvolumen (18) mit einer Trennwand (16), die eine in einem Dichtewächtergehäuse (1) ausgebildete erste Referenzkammer (14) von dem Messvolumen (18) trennt, und einer Trennwandbewegungserfassungseinrichtung (20) zur Erfassung einer Bewegung der Trennwand (16). Zur Verringerung von Fehlalarmen ist eine außerhalb des Dichtewächtergehäuses (1) ausgebildete zweite Referenzkammer (24) vorgesehen, die mittels einer Fluidleitung (26) mit der ersten Referenzkammer (14) in Fluidverbindung ist.

## Beschreibung

Die Erfindung betrifft einen Dichtewächter, eine Schaltanlage mit einem Dichtewächter sowie ein mittels eines solchen Dichtewächters durchführbares Überwachungsverfahren zur Überwachung einer Gasdichte.

Dichtewächter sind Druckmessgeräte zur Überwachung der Gasdichte eines zu überwachenden Gases.

Wie aus der DE10232823A1 bekannt, dienen Dichtewächter insbesondere zur Überwachung der Dichte des in gasisolierten Hoch- oder Mittelspannungsanlagen oder -geräte, zum Beispiel Hochspannungsschaltanlagen, -wandlern, -rohrleitern, Schaltgeräte und Transformatoren, als Isolator befindlichen Gases, zum Beispiel SF6. Der aus der DE10232823A1 bekannte Dichtewächter ist hierzu mit einem elektronischen Dichtesensor als Messwertgeber versehen, der einen im Gas angeordneten Mess-Schwingquarz aufweist und als Messwert ein zur Dichte des Gases proportionales Frequenzsignal liefert, wobei das Frequenzsignal einer elektronischen Auswerteeinheit zugeführt wird.

Die Erfindung betrifft insbesondere Dichtewächter, die als Druckmessgerät mit Kompensation des Temperatureinflusses zur Messung von Gasdichte ausgebildet sind. Wie oben bereits erwähnt, werden Dichtewächter unter anderem dazu eingesetzt, die Dichte eines in einen zu überwachenden Raum eingefüllten Gases, zu überwachen. Beispiel einer solchen Anwendung sind Hochspannungs- und Mittelspannungs- Schaltanlagen, die bevorzugt mit Schwefelhexaflourid (SF₆) befüllt sind. SF₆ zählt zu den schwersten bekannten Gasen und weist hervorragende elektrische Isoliereigenschaften auf. Allerdings ist SF6 auch als Treibhausgas bekannt und unterliegt während seines Einsatzes strengen Überwachungen, alle Gasverluste während Herstellung und Betrieb müssen überwacht und kontrolliert werden.

Zur Überwachung der Dichte des Gases werden Dichtewächter eingesetzt, die eine Änderung der Gasdichte als Druckänderung erfassen und anzeigen. Da sich der Gasdruck jedoch mit einer Änderung der Temperatur in dem zu überwachenden Raum ebenfalls ändert, ohne die Dichte des Gases wesentlich zu beeinflussen, ist es wünschenswert, derartige Änderungen der Temperatur zu kompensieren.

Bei elektronischen Überwachungssystemen findet man neben kombinierten Druck-Temperaturüberwachungssystemen, die nachteilig zwei Messgrössen erfassen müssen, vor allem Dichtesensoren auf dem Schwingquarzprinzip, wie sie z.B. aus der US 5'421'190 bekannt sind, die messtechnisch die einzig direkte Erfassung der Gasdichte erlauben.

Es sind - in der rein mechanischen Dichteüberwachung d.h. ohne der Verwendung einer elektrischen Hilfsenergie - darüber hinaus bei auf dem Markt befindlichen Dichtewächtern im wesentlichen drei weitere Möglichkeiten bekannt die Gasdichte zu überwachen. Neben temperaturkompensierten Druckschaltern, die für die Temperaturkompensation ein Bimetallsystem verwenden, finden vor allem sogenannte, gleichfalls bimetall-kompensierte Kontaktmanometer und Referenzkammersysteme Berücksichtigung.

Das Referenzkammersystem ist, beispielsweise aus "SF6 Dichtewächter-Gasverlust unter Kontrolle" elektrische energie-technik, 31 (6) 24-26 (1986), seit Mitte der 80er Jahre bekannt. Bei diesem Messprinzip wird die Dichte des zu überwachenden Gases mit der Dichte des gleichen Gases, das sich in einem hermetisch abgeschlossenen Raum, eingebaut nahe eines Druckanschlusses befindet, verglichen. Bei gleicher Gastemperatur kann der Dichtevergleich durch einen Druckvergleich ersetzt werden. Im Inneren eines Dichtewächergehäuses herrscht, begrenzt durch einen druckbeaufschlagten Metallbalg der Gasdruck der Schaltanlage während im Inneren des Balgsystems der vorgefüllte Druck eines Referenzgases wirkt. Solange, bei konstanter Temperaturdifferenz die Dichte des Schaltanlagengases und die Dichte des Referenzgases gleich sind, erfolgt keinerlei Bewegung des mit einem Stössel verbundenen und beweglichen Balgbodens. Erst bei einer Druckänderung (beispielsweise einer Leckage des Schaltanlagengases) bewegt sich das System Balgboden-Stössel und betätigt einen oder mehrere Mikroschalter. Ein anliegender Stromkreis kann geöffnet oder geschlossen werden, der Dichtewächter kann entsprechende Alarmwerte bei Leckagen generieren.

In der Praxis kommt es allerdings bei Dichtewächtern immer wieder zu ärgerlichen Fehlalarmen. Die Erfindung hat sich zur Aufgabe gestellt, einen auf mechanischen Prinzipien beruhenden Dichtewächter zu schaffen, der weniger anfällig für Fehlalarme ist.

Diese Aufgabe wird durch einen Dichtewächter mit den Merkmalen des Anspruches 1 gelöst.

Vorteilhafte Ausgestaltungen der Erfindung sind Gegenstand der Unteransprüche. Vorteilhafte Verwendungen des Dichtewächters sind Gegenstand der Nebenansprüche.

Die Erfindung schafft einen Dichtewächter zur Überwachung einer Gasdichte in einem Messvolumen mit einer Trennwand, die eine in einem Dichtewächtergehäuse ausgebildete erste Referenzkammer von dem Messvolumen trennt, und einer Trennwandbewegungserfassungseinrichtung zur Erfassung einer Bewegung der Trennwand,
wobei eine außerhalb des Dichtewächtergehäuses ausgebildete zweite Referenzkammer vorgesehen ist, die mittels einer Fluidleitung mit der ersten Referenzkammer in Fluidverbindung ist.

Nachteilig bei bisherigen Konstruktionen von Dichtewächten mit Referenzkammern ist die Voraussetzung annähernd gleicher Temperaturverhältnisse der beiden Gasräume (Referenz-Gasraum im Inneren der Referenzkammer und anliegender Druck des zu überwachrenden Gases). In der Praxis herrschen oft uneinheitliche Temperaturverhältnisse, so heizen sich z.B. freilufttaugliche Schaltanlagen mit ihrer sehr grossen thermischen Masse (mehrere m³) und die im Dichtewächter integrierte Referenzkammer (typischerweise ca. 10-20 cm³) infolge der Tageserwärmung unterschiedlich schnell auf. Die Folge ist ein Temperaturgradient und nachfolgend fehlerhaftes Schaltverhalten, man spricht von Fehlkompensation einer Dichteüberwachungseinheit infolge inhomogener Temperaturverteilung.

Erfindungsgemäss wird nun das Referenzvolumen nicht allein durch die erste Referenzkammer nahe der Trennwand, z.B. das Innere eines Balges, gebildet, vielmehr ist diese erste Referenzkammer mit einer Fluidleitung, vorzugsweise ein dünnes Kapillarrohr, an ein externes Referenzvolumen gekoppelt, das sich sehr nahe an dem zu überwachenden Gasraum, z.B. sehr nahe an einer Schaltanlage, befinden kann und eine sehr gute Wärmeanbindung an den zu überwachenden Gasraum besitzt. Die Kompensation einer Temperaturänderung in dem zu überwachendem Gasraum wird nun durch das gesamte kombinierte Referenzkammersystem, d.h. die zweite, insbesondere externe, Referenzkammer, die Fluidleitung, z.B. Kapillarrohr, und die erste Referenzkammer, z.B. gebildet durch ein Restvolumen innerhalb des Druckanschlusses, gebildet.

Gemäß einer bevorzugten Ausgestaltung weist die externe Referenzkammer zwischen 20 und 200 cm3 Volumen auf. Vorzugsweise ist die zweite Referenzkammer mit dem Dichtewächtergehäuse über ein Kapillarrohr als Fluidleitung verbunden.

Die Fluidleitung ist weiter vorzugsweise flexibel ausgebildet. So können z.B. die zweite Referenzkammer und die erste Referenzkammer vormontiert mit der Fluidleitung geliefert werden, und die zweite Referenzkammer trotz der Anbindung an die erste Referenzkammer dennoch einfach im Inneren oder am Rand des zu überwachenden Gasraumes platziert werden.

Die Fluidleitung hat vorzugsweise möglichst wenig Volumen. Z.B. weist ein die Fluidleitung bildendes Kapillarrohr nur wenige 1/10 mm Innendurchmesser auf. Die Fluidleitung kann einige Zentimeter bis mehrere Meter (bis zu 20 m) lang sein.

Das gesamte Referenzkammersystem (erste und zweite Referenzkammer und Fluidleitung) ist vorzugsweise mit demselben Gas wie das zu überwachende Gasvolumen, z.B. die zu überwachende Schaltanlage, gefüllt.

Eine Änderung der Temperatur in dem zu überwachenden Raum führt auch zu einer sehr zeitnahen Temperaturänderung in dem Referenzvolumen, somit herrschen sowohl in der Schaltanlage wie auch in dem gesamten Referenzvolumen identische Verhältnisse.

Die Trennwand bleibt somit auch bei Temperaturänderung immer an der gleichen Position, und ein Fehlalarm aufgrund von Temperaturgradienten wird vermieden. Z.B. kann die Trennwand Teil eines Metallbalges sein. Die Bewegungserfassungseinrichtung kann z.B. mit einer Schaltstange und einem Mikroschalter versehen sein. Die mit dem Balg verbundene Schaltstange bleibt in diesem Fall (Temperaturänderung) immer an der gleichen Position, ein nachfolgender Fehlalarm wird vermieden.

Von weiterem Vorteil ist es, wenn das aktive Volumen der ersten Referenzkammer, z.B. das Innere eines Metallbalges, durch Einbringen eines weiteren Volumens innerhalb des Druckanschlusses reduziert wird. Dies kann konstruktiv beispielsweise über ein Füllelement, z.B. einen Aluminiumring (dessen Volumen kann z.B. zwischen 5 und 10 cm³ betragen), erfolgen. Das insbesondere ringförmige Füllelement kann fest mit der Trennwand, z.B. fest mit einem Balgsystem, verbunden sein. Dadurch wird der Anteil der ersten Referenzkammer an dem kombinierten Referenzvolumen gegenüber dem Anteil der zweiten Referenzkammer verringert.

Vorzugsweise befindet sich der ganz überwiegende Teil des Referenzvolumens (z.B. > 90%) sehr nahe an dem zu überwachenden Gasraum. Wird eine gute thermische Kopplung zwischen Gasraum und externer Referenzkammer realisiert, so kann von nahezu thermisch identischen Bedingungen ausgegangen werden, in der Folge werden Fehlalarme wegen Temperaturgradienten vermieden.

Im Fall der Verflüssigung des SF₆ Gases (beispielsweise bei 6 bar Fülldruck im Bereich -30°C) werden die Gasräume manchmal elektrisch beheizt, auch in diesem Fall wird die externe Referenzkammer die annähernd gleiche Temperatur wie der zu überwachende Gasraum aufweisen.

Vorzugsweise weist der Dichtewächter folgende Merkmale auf:
o Die externe Referenzkammer wird durch ein dünnes Kapillarrohr an das Dichtewächtergehäuse angebunden.
o Damit möglichst viel Volumen der Referenzkammer ausgenützt werden kann, kann im Dichtewächtergehäuse eine Volumenreduktion durch Einbringen eines zusätzlich passiven Volumens in das Anschlussstück vorgenommen werden.
o Die erste Referenzkammer kann im Inneren eines Balges ausgebildet sein. Bei einer weiteren Ausführungsform kann ein Balg in die erste Referenzkammer hineinragen, wobei das zu überwachende Gas in das Innere des Balges geleitet wird; letzteres ist insbesondere deswegen möglich, weil in der ersten Referenzkammer nur ein sehr kleines Volumen vorhanden sein braucht.
o Die externe Referenzkammer kann in den zu überwachenden Gasraum der Schaltanlage integriert sein.
o Die externe Referenzkammer kann im zu überwachenden Gasraum der Schaltanlage durch ein Röhrchen und/oder durch eine Bohrung durch das Anschlussstück des Druckdichtewächtergehäuses integriert sein.

Ausführungsbeispiele der Erfindung werden nachfolgend anhand der beigefügten Zeichnung näher erläutert. Darin zeigt:
- Fig. 1: eine schematische Darstellung einer ersten erfindungsgemäßen Ausführungsform eines Dichtewächters zur Überwachung der Gasdichte in einem Gasraum einer Schaltanlage;
- Fig. 2: eine schematische Darstellung einer zweiten erfindungsgemäßen Ausführungsform eines Dichtewächters zur Überwachung der Gasdichte in einem Gasraum einer Schaltanlage;
- Fig. 3: eine schematische Darstellung einer dritten erfindungsgemäßen Ausführungsform eines Dichtewächters zur Überwachung der Gasdichte in einem Gasraum einer Schaltanlage;
- Fig. 4: eine schematische Darstellung einer vierten erfindungsgemäßen Ausführungsform eines Dichtewächters zur Überwachung der Gasdichte in einem Gasraum einer Schaltanlage;
- Fig. 5: eine schematische Darstellung einer fünften erfindungsgemäßen Ausführungsform eines Dichtewächters zur Überwachung der Gasdichte in einem Gasraum einer Schaltanlage; und
- Fig. 6: rein zu Darstellungszwecken eine schematische Darstellung eines nicht von der Erfindung erfassten Dichtewächters in konventioneller Bauart zur Überwachung der Gasdichte in einem Gasraum einer Schaltanlage;

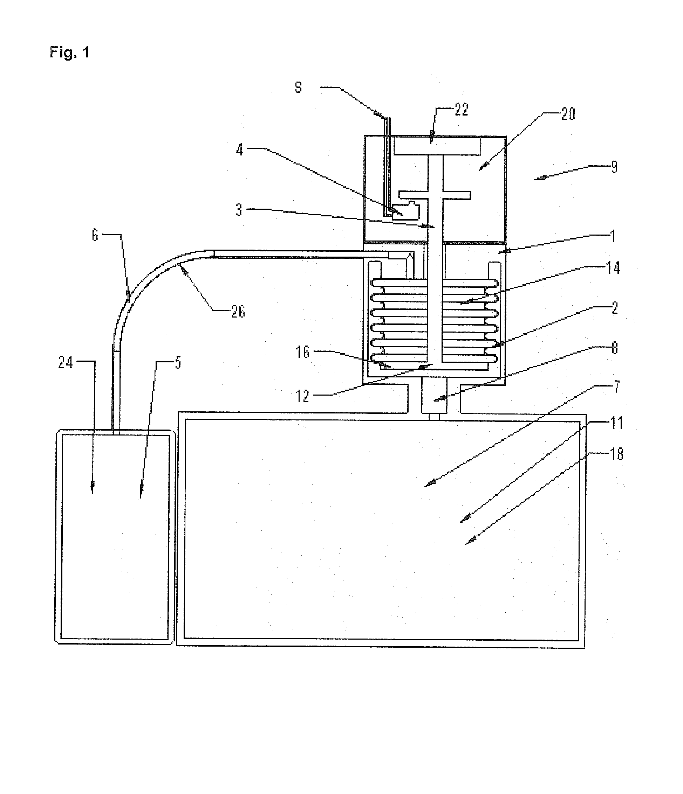

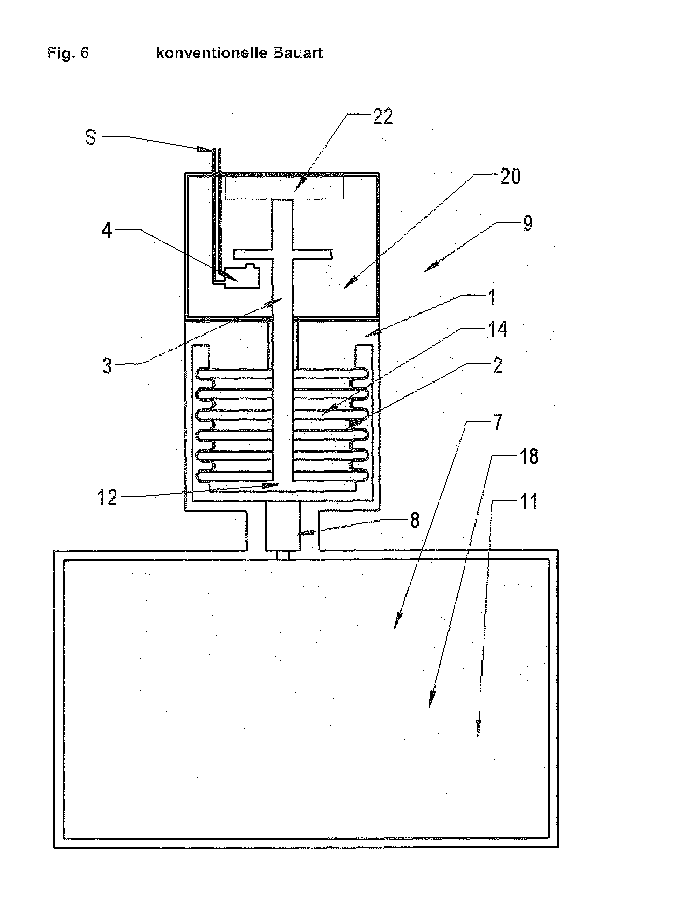

In den Figuren sind unterschiedliche Ausführungsformen eines Dichtewächters 9 dargestellt, der zur Überwachung einer Gasdichte in einem Gasraum 7 einer Schaltanlage 11 an einem an dem Gasraum 7 ausgebildeten Druckanschluss 8 angeschlossen ist. Fig. 6 zeigt dabei zur Darstellung des Prinzips des Referenzkammersystems einen Dichtewächter 9 in konventioneller Bauart, während die Fig. 1 bis 5 Ausführungsformen der Erfindung zeigen, die eine Modifikation dieses Referenzkammersystems darstellen.

Der Dichtewächter 9 weist ein Dichtewächtergehäuse 1 auf, innerhalb der eine erste Referenzkammer 14 ausgebildet ist. Die erste Referenzkammer 14 ist durch eine Trennwand 16 von dem Gasraum 7 und damit von dem das zu überwachende Gas enthaltenden Messvolumen 18 getrennt. Die Trennwand 16 ist beweglich angeordnet. Ändert sich die Dichte des Gases, hat dies eine Bewegung der Trennwand 16 zur Folge. Eine solche Bewegung der Trennwand 16 wird durch eine Trennwandbewegungserfassungseinrichtung 20 überwacht.

Die Trennwand 16 ist in den dargestellten Beispielen als Bereich eines Balges, z.B. eines Metallbalges 2 ausgebildet. Z.B. ist die Trennwand 16 durch einen Balgboden 12 gebildet.

Die Trennwandbewegungserfassungseinrichtung 20 weist einen Stößel 3, der die Bewegung der Trennwand 16 überträgt, und einen durch den Stößel 3 betätigbaren Mikroschalter 4 auf. Der Mikroschalter 4 ist an eine nicht näher dargestellte passive Schaltpunktüberwachung S angeschlossen. Außerdem ist der Stößel 3 an eine Anzeige 22 angeschlossen, wo der Gasdruck und damit die Gasdichte anzeigbar ist.

Bei dem in Fig. 6 dargestellten, nicht von der Erfindung erfassten Dichtewächter in konventioneller Bauart bildet die in dem Metallbalg 2 ausgebildete erste Referenzkammer 14 das einzige Referenzvolumen. Dieses Referenzvolumen dient zur rein mechanischen Temperaturkompensation. Das in dem Referenzvolumen befindliche Referenzgas (gleiches Gas wie das zu überwachende Gas in dem Gasraum 7) reagiert auf Temperaturänderungen gleich wie das Gas in dem Gasraum 7, so dass Gasdichteänderungen, die rein auf Temperaturänderungen beruhen, nicht zu einer Bewegung der Trennwand 14 führen sollten.

Allerdings ist zu erkennen, dass die erste Referenzkammer 14 durch den Druckanschluss 8 von dem Gasraum 7 getrennt ist; die Thermokopplung zwischen der ersten Referenzkammer 14 und dem Gasraum 7 ist somit eingeschränkt. Zudem enthält die erste Referenzkammer 14 im Vergleich zum Gasraum 7 nur eine sehr geringe Gasmenge, die demnach viel schneller auf Temperaturveränderungen reagiert als die große Gasmenge in dem Gasraum 7. Daher kann es bei Temperaturgradienten leicht zu unterschiedlichen Temperaturen und somit unterschiedlichen Dichten und damit zu Fehlalarmen kommen.

Um solche Fehlalarme zu vermeiden, werden die Ausführungsformen gemäß den Fig. 1 bis 5 vorgeschlagen. Bei diesen Ausführungsformen ist ein externes Referenzvolumen 5 vorgesehen, das an den Gasraum 7 thermisch gekoppelt ausgebildet ist und mit der ersten Referenzkammer 14 in Fluidverbindung steht.

Zum Bilden des externen Referenzvolumens 5 ist bei den Ausführungsformen der Fig. 1 bis 5 eine zweite Referenzkammer 24 vorgesehen, die mittels einer Fluidleitung 26 mit der ersten Referenzkammer 14 verbunden ist. Die Fluidleitung 26 ist durch ein Kapillarrohr 6 gebildet, welches einen Innendurchmesser von nur wenigen 1/10 mm und somit einen nur geringen Innenquerschnitt aufweist. Das Kapillarrohr 6 ist z.B. aus Metall und flexibel ausgebildet. Die Länge beträgt zwischen einigen Zentimetern und mehreren Metern und kann z.B. bis zu 20 m betragen.

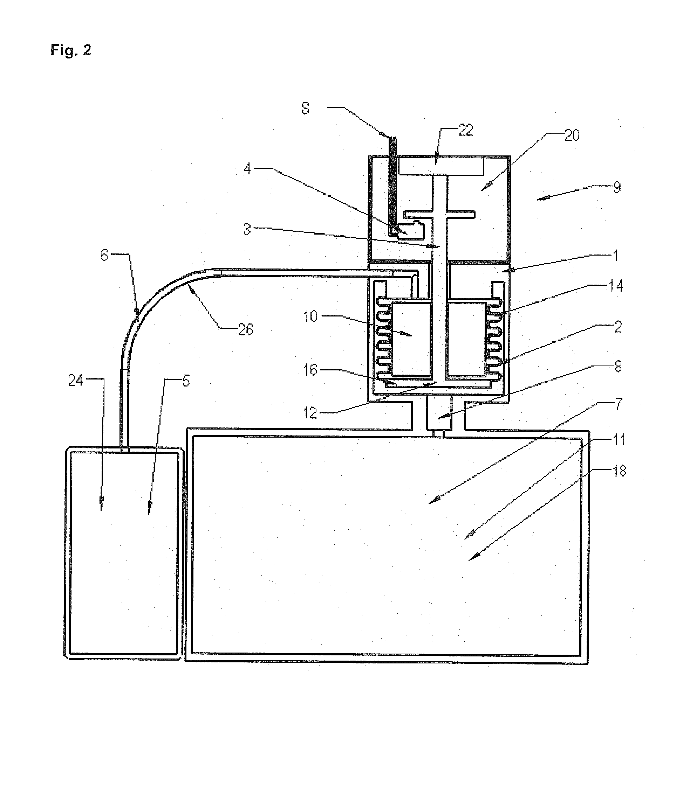

Während bei der Ausführungsform von Fig. 1 das Volumen der ersten Referenzkammer 14 gegenüber der konventionellen Konstruktion von Fig. 6 unverändert bleibt, ist bei der Ausführungsform von Fig. 2 innerhalb der durch den Metallbalg 2 gebildeten ersten Referenzkammer 14 ein Füllelement zum Bilden eines passiven Zusatzvolumens 10 zur Volumenreduzierung vorgesehen. Beispielsweise ist dies ein Aluminiumring mit einem Volumen von ca. 5 bis 10 cm³. Dadurch lässt sich das Volumen der ersten Referenzkammer 14 so verkleinern, dass mehr als 90% des gesamten kombinierten Referenzvolumens, welches durch die beiden Referenzkammern 14 und 24 und die Fluidleitung 26 gebildet wird, auf das externe Referenzvolumen 5 entfällt.

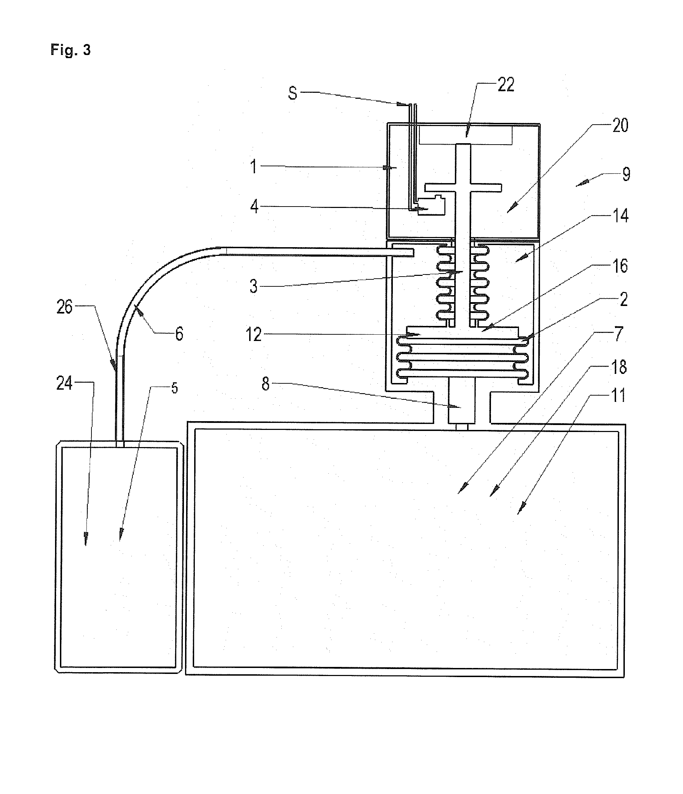

Während bei den Ausführungsformen der Fig. 1 und 2 die erste Referenzkammer 14 durch das Innere des Metallbalges 2 gebildet wird, ist bei der in Fig. 3 dargestellten Ausführungsform vorgesehen, dass das Innere des Metallbalges 2 an den Druckanschluss 8 angeschlossen ist, und die erste Referenzkammer 14 durch das Äußere des Balges 2 und einen Innenraum des Dichtewächtergehäuses 1 gebildet wird.

Das Referenz-Gas in dem externen Referenzvolumen 5 kann sich gleich wie das Gas in dem Gasraum 7 erwärmen. Trotz des geringen Innendurchmessers der Fluidleitung 26 wird so innerhalb der ersten Referenzkammer 14 ein entsprechend sich mit der Temperatur ändernder Druck geschaffen. Fehlalarme werden so deutlich reduziert.

Bei den Ausführungsformen der Fig. 1 bis 3 ist das Referenzvolumen thermisch gut gekoppelt an den Gasraum 7, jedoch außerhalb des Gasraums vorgesehen. Dies hat den Vorteil, dass kein Durchbruch für die Fluidleitung 26 in dem Gasraum vorgesehen werden muss, der entsprechend abgedichtet werden müsste. Allerdings hängt die Performance dieser Ausführungsformen von der Qualtität der thermischen Kopplung ab.

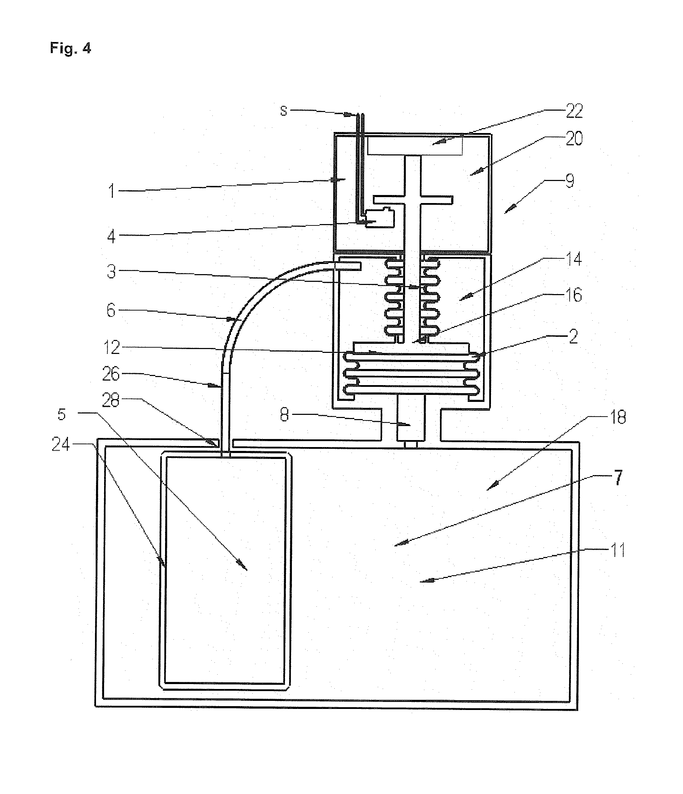

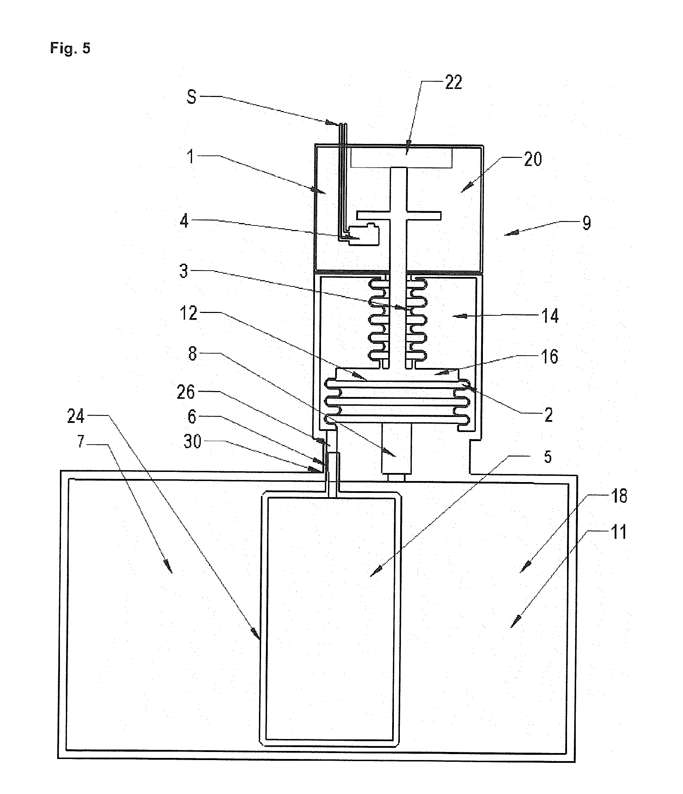

Bei den in den Fig. 4 und 5 dargestellten weitere Ausführungsformen ist daher vorgesehen, das Referenzvolumen 5 innerhalb des Gasraumes 7 vorzusehen, so dass die thermische Anbindung ideal ist.

Bei der Ausführungsform von Fig. 4 ist hierfür im Gehäuse für die Schaltanlage 11 oder allgemein in der Wandung des Gasraumes 7 ein Kanal 28 oder eine Bohrung für die Fluidleitung 26 vorgesehen.

Bei der Ausführungsform von Fig. 5 ist die Fluidleitung 26 durch den Druckanschluss 8 geführt. Hierzu ist im Bereich des Druckanschlusses 8 eine Bohrung 30 für die Fluidleitung 26 vorgesehen.

### Bezugszeichenliste:

- 1: Dichtewächtergehäuse
- 2: Metallbalg
- 3: Stößel
- 4: Mikroschalter
- 5: externes Referenzvolumen
- 6: Kapillarrohr
- 7: Gasraum
- 8: Druckanschluss
- 9: Dichtewächter
- 10: (passives) Zusatzvolumen (zur Reduzierung)
- 11: Schaltanlage
- 12: Balgboden
- 14: erste Referenzkammer
- 16: Trennwand
- 18: Messvolumen
- 20: Trennwandbewegungserfassungseinrichtung
- 22: Anzeige
- 24: zweite Referenzkammer
- 26: Fluidleitung
- 28: Kanal
- 30: Bohrung
- S: (passive) Schaltpunktüberwachung

## Patentansprüche

1. Dichtewächter (9) zur Überwachung einer Gasdichte in einem Messvolumen (18) mit einer Trennwand (16), die eine in einem Dichtewächtergehäuse (1) ausgebildete erste Referenzkammer (14) von dem Messvolumen (18) trennt, und einer Trennwandbewegungserfassungseinrichtung (20) zur Erfassung einer Bewegung der Trennwand (16),
wobei eine außerhalb des Dichtewächtergehäuses (1) ausgebildete zweite Referenzkammer (24) vorgesehen ist, die mittels einer Fluidleitung (26) mit der ersten Referenzkammer (14) in Fluidverbindung ist.

2. Dichtewächter nach Anspruch 1,
**dadurch gekennzeichnet,**
**dass** die Fluidleitung (26) schlauchartig flexibel ausgebildet ist.

3. Dichtewächter nach einem der voranstehenden Ansprüche,
**dadurch gekennzeichnet,**
**dass** die Fluidleitung (26) als Kapillarrohr (6) ausgebildet ist.

4. Dichtewächter nach einem der voranstehenden Ansprüche,
**dadurch gekennzeichnet,**
**dass** die Innenquerschnittsfläche der schlauch- oder rohrartigen Fluidleitung (26) weniger als 1 mm² beträgt, vorzugsweise weniger als 0,5 mm² beträgt und insbesondere zwischen 0,005 mm2 und 0,1 mm2 beträgt.

5. Dichtewächter nach einem der voranstehenden Ansprüche,
**dadurch gekennzeichnet,**
**dass** die Fluidleitung (26) eine Länge zwischen ca. 0,1 m und ca. 20 m aufweist.

6. Dichtewächter nach einem der voranstehenden Ansprüche,
**dadurch gekennzeichnet,**
**dass** die Trennwand (16) an einem Metallbalg (2) ausgebildet ist, der die erste Referenzkammer (14) begrenzt.

7. Dichtewächter nach einem der voranstehenden Ansprüche,
**dadurch gekennzeichnet,**
**dass** in der ersten Referenzkammer (14) ein vorzugsweise ringförmiges Füllelement, vorzugsweise mit einem passiven Volumen (10) in einem Bereich zwischen 5 und 10 cm³, zum Verringern des Volumens der ersten Referenzkammer (14) vorgesehen ist.

8. Dichtewächter nach einem der voranstehenden Ansprüche,
**dadurch gekennzeichnet,**
**dass** das Volumen der zweiten Referenzkammer (24) wenigstens 50%, vorzugsweise mehr als 70 % und am meisten bevorzugt mehr als 90% des durch die erste Referenzkammer (14), die zweite Referenzkammer (24) und die Fluidleitung (26) gebildeten kombinierten Referenzvolumens beträgt.

9. Dichtewächter nach einem der voranstehenden Ansprüche,
**dadurch gekennzeichnet,**
**dass** das Volumen (5) der zweiten Referenzkammer (24) zwischen 20 und 200 cm3 beträgt.

10. Schaltanlage (11) mit einem mit einem Schutzgas befüllten Gasraum (7), der einen Druckanschluss (8) aufweist, an dem ein Dichtewächter (9) nach einem der voranstehenden Ansprüche zur Überwachung der Dichte des Schutzgases angeschlossen ist, wobei die zweite Referenzkammer (24) an einer anderen Stelle als der Druckanschluss (8) innerhalb des Gasraums (7) oder großflächig angrenzend an den Gasraum (7) angeordnet ist.

11. Schaltanlage nach Anspruch 10,
**dadurch gekennzeichnet,**
**dass** die Fluidleitung (26) durch den Druckanschluss (8) oder durch ein den Druckanschluss (8) bildendes Bauteil geführt ist.

12. Verfahren zur Überwachung der Gasdichte in einem Gasraum (7) mit den Schritten:
Trennen einer ersten Referenzkammer (14) von dem Gasraum (7) mittels einer beweglichen Trennwand (16),
Anordnen einer zweiten Referenzkammer (24), die wesentlich größer als die erste Referenzkammer (14) ausgebildet ist, in oder an dem Gasraum (7) und thermisches Koppeln der zweiten Referenzkammer (24) mit dem zu vermessenden Gas,
Vorsehen einer Fluidleitung (26), die ein wesentlich kleineres Volumen als die zweite Referenzkammer (24) hat, zum Verbinden der zweiten Referenzkammer (24) mit der ersten Referenzkammer (14),
Überwachung der Gasdichte durch Überwachung einer Bewegung der Trennwand (16).
